# EUROPÄISCHE PATENTANMELDUNG

(11) **EP 3 979 480 A1**
(43) Veröffentlichungstag der Anmeldung: **06.04.2022**
(21) Anmeldenummer: 20199593.3
(22) Anmeldetag: 01.10.2020
(51) Int. Cl.: H02M 1/32

(54) **ANORDNUNG UND VERFAHREN ZUM ERMITTELN VON TEMPERATUREN ELEKTRONISCHER BAUELEMENTE**

(71) Anmelder: Siemens Aktiengesellschaft, 80333 München (DE)
(72) Erfinder: Geyer, Horst, 91058 Erlangen (DE)

(57) **Zusammenfassung**

Anordnung umfassend eine Versorgungseinheit (2) eines industriellen Kontrollsystems, wobei die Versorgungseinheit (2) zu einer übergeordneten Recheneinheit (3) zugeordnet ist, wobei die Versorgungseinheit (2) mindestens ein elektronisches Bauteil (100) umfasst, wobei das mindestens eine elektronische Bauteil (100) zumindest ein elektronisches Bauelement (108, 109) aufweist, wobei die Versorgungseinheit (2) dazu ausgebildet ist, eine erste Temperatur (T1) des zumindest einen elektronischen Bauelements (108,109) mittels eines ersten thermischen Modells (M1) zu berechnen, und die übergeordnete Recheneinheit (3) dazu konfiguriert ist, eine zweite Temperatur (T2) des zumindest einen elektronischen Bauelements (108, 109) mittels eines zweiten thermischen Modells (M2) zu berechnen, wobei die Versorgungseinheit (2) und die übergeordnete Recheneinheit (3) derart zusammenwirken, dass zumindest die erste Temperatur (T1) oder die zweite Temperatur (T2) des zumindest einen elektronischen Bauelements (108,109) berechnet wird.

## Beschreibung

Die Erfindung betrifft eine Anordnung, die eine Versorgungseinheit eines industriellen Kontrollsystems, und eine der Versorgungseinheit zugeordnete übergeordnete Recheneinheit umfasst. Die Versorgungseinheit weist mindestens ein elektronisches Bauteil auf, welches zumindest ein elektronisches Bauelement umfasst. Die Versorgungseinheit ist dazu ausgebildet und/oder konfiguriert, eine erste Temperatur des zumindest einen elektronischen Bauelements mittels eines ersten thermischen Modells zu berechnen.

Darüber hinaus betrifft die Erfindung ein Verfahren zum Ermitteln mindestens einer Temperatur zumindest eines elektronischen Bauelements mindestens eines elektronischen Bauteils einer mit einer übergeordneten Recheneinheit versehenen Versorgungseinheit eines industriellen Kontrollsystems. Dabei kann eine erste Temperatur des zumindest einen elektronischen Bauelements durch die Versorgungseinheit mithilfe eines ersten thermischen Modells berechnet werden.

Außerdem betrifft die Erfindung ein Computerprogramm, insbesondere eine Cloud-App, umfassend Befehle, die bei der Ausführung des Programms durch die vorgenannte Anordnung diese veranlassen, das vorgenannte Verfahren auszuführen.

Obendrein betrifft die Erfindung ein Datenträgersignal, das das vorgenannte Computerprogramm überträgt, und ein beispielsweise flüchtiges oder nichtflüchtiges maschinenlesbares Speichermedium umfassend das vorgenannte Computerprogramm.

Anordnungen und Verfahren der oben genannten Art sind im Stand der Technik bekannt. Die Berechnung der Temperatur des elektronischen Bauteils, beispielsweise eines IGBT (engl. **I**nsulated-**G**ate-**B**ipolar-**T**ransistor), wird üblicherweise mittels einer auf der Versorgungseinheit, insbesondere auf dem Umrichter ausführbaren Software durchgeführt und basiert üblicherweise auf einer Sensortemperatur, welche die Kühlplattentemperatur misst, auf welchen das IGBT-Modul aufgebracht ist. Geräte, beispielsweise Versorgungseinheiten können hierbei über eine unterschiedliche Anzahl von Temperatursensoren verfügen. Diese Sensoren werden dann folglich dem passenden Chip zugeordnet. Bei den Umrichtern, die als eine Kombination aus einer Control Unit und einem Leistungsteil ausgebildet sind, wird eine Temperatur aktuell nur auf dem Leistungsteil berechnet, welche sie wiederum der Control Unit bereitstellt, damit die Control Unit diese Temperatur beispielsweise über ein IBN-Tool nach außen darstellen kann.

Die Temperaturermittlung der elektronischen Bauelemente, beispielsweise der IGBTs, kann bspw. dazu dienen, diese vor einer Übertemperatur zu schützen. Übersteigt dabei der berechnete Wert der Temperatur einen vorgegebenen Wert, kann bspw. durch Abschaltung der Versorgungseinheit, beispielsweise eines Umrichters, oder durch Reaktionen in der Versorgungseinheit, z.B. Stromreduzierung und/oder Pulsfrequenzreduzierung die Temperatur des entsprechenden elektronischen Bauelements reduziert werden.

Außerdem kann anhand der Temperaturwerte der elektronischen Bauelemente und der mittels der Hersteller bereitgestellten Powercycling-Kurven eine Verschleißberechnung für jedes Bauelement, beispielsweise für jeden IGBT-Chip durchgeführt werden. Dabei gilt, je genauer die Chiptemperaturen ermittelt werden, umso genauer können solche Verschleißberechnungen durchgeführt werden.

Darüber hinaus kann ein Gerät/eine Versorgungseinheit, auf dem/der die Chiptemperatur sehr genau bestimmt werden kann, besser ausgenutzt werden, da man einen geringeren Sicherheitsfaktor bei der Auslegung der Geräte/Versorgungseinheiten berücksichtigen muss.

Dazu kommt ein weiteres Problem, dass, wenn die Versorgungseinheit nicht bestromt wird, die Berechnung der Temperatur nicht erfolgen kann. Wird die Versorgungseinheit wieder in Betrieb genommen, so liegt keinerlei Information vor, welche Temperatur die elektronischen Bauelemente in der Versorgungseinheit hatten, bevor die Versorgungseinheit abgeschaltet wurde. Dies kann führen, dass bei Wiederinbetriebnahme der Versorgungseinheit Temperatur ihrer elektronischen Bauelemente zunächst geschätzt werden muss. Eine solche Schätzung ist nicht zuverlässig und führt zu keinen optimalen Ergebnissen.

Aufgrund des oben Gesagten kann die Aufgabe der vorliegenden Erfindung darin gesehen werden, die eingangs genannten Anordnungen und Verfahren weiter zu entwickeln und dadurch eine zuverlässige und vorzugsweise genauere Ermittlung der Temperatur der elektronischen Bauelemente in den Versorgungseinheiten, insbesondere in den Umrichtern zu ermöglichen.

Die oben genannte Aufgabe wird mit einer eingangs genannten Anordnung erfindungsgemäß dadurch gelöst, dass die übergeordnete Recheneinheit dazu konfiguriert ist, eine zweite Temperatur des zumindest einen elektronischen Bauelements mittels eines zweiten thermischen Modells zu berechnen, wobei die Versorgungseinheit und die übergeordnete Recheneinheit (in Betrieb) derart zusammenwirken, dass zumindest die erste Temperatur oder die zweite Temperatur des zumindest einen elektronischen Bauelements berechnet wird.

Die übergeordnete Recheneinheit kann beispielsweise die Temperaturberechnung übernehmen - es wird nur die zweite Temperatur berechnet, wenn die Versorgungseinheit ausgeschalten wird. Dies ist der Fall, wenn beispielsweise keine Versorgungsspannung mehr an dem Umrichter vorhanden. Ab diesem Moment geht die Information über die Temperatur der thermischen Strecke verloren. Die übergeordnete Recheneinheit, beispielsweise übergeordnete Steuerung, ein Edge-Gerät oder ein Cloud-Server kann die Berechnung der Temperatur übernehmen, und diese Information beim Wiedereinschalten des Umrichters an diesen übergeben. Auf diese Weise wird gewährleistet, dass immer, wenn das industrielle Kontrollsystem in Betrieb ist, eine berechnete und nicht geschätzte oder angenommene Temperatur des zumindest einen elektronischen Bauelements zur Verfügung steht. Auf diese Weise ist eine zuverlässige Ermittlung der Temperatur des zumindest einen elektronischen Bauelements möglich.

Beispielsweise, solange eine Datenverbindung zwischen der Versorgungseinheit und der übergeordneten Recheneinheit besteht, ist es denkbar, dass die Versorgungseinheit alle (für den Betrieb der Versorgungseinheit) relevanten Daten (z.B. Temperaturen und vorzugsweise Verschleißwerte) von der übergeordneten Recheneinheit erhält, die die zweite Temperatur und vorzugsweise basierend auf der zweiten Temperatur auch Verschleißwerte rechnet. Fällt die Datenverbindung aus, so kann die Versorgungseinheit, die Berechnung wieder übernehmen.

Bei einer Ausführungsform kann also mit Vorteil vorgesehen sein, dass die Versorgungseinheit als ein Umrichter beispielsweise eines industriellen Kontrollsystems zum Betreiben einer Automatisierungsanlage ausgebildet ist.

Des Weiteren kann bei einer Ausführungsform Vorteil vorgesehen sein, dass die Recheneinheit als eine übergeordnete Steuerung, als ein Edge-Gerät oder als ein Cloud-Server ausgebildet ist.

Bei einer Ausführungsform kann mit Vorteil vorgesehen sein, dass das jeweilige thermische Modell auf der Versorgungseinheit bzw. auf der übergeordneten Recheneinheit gespeichert ist.

Bei einer Ausführungsform kann es vorteilhaft sein, wenn das zweite thermische Modell detaillierter als das erste thermische Modell ist, sodass die zweite mittels des zweiten thermischen Modells berechnete Temperatur genauer als die erste mittels des ersten thermischen Modells berechnete Temperatur ist. Mit einer verbesserten Berechnung der Temperatur des zumindest einen elektronischen Bauelements, können auch die Verschleißberechnungen für dieses zumindest eine elektronische Bauelemente besser durchgeführt werden. Dadurch kann eine bessere Genauigkeit erhalten werden.

Bei einer Ausführungsform kann mit Vorteil vorgesehen sein, dass beim Berechnen der Verlustleistung mittels des zweiten thermischen Modells eine aktuelle Temperatur des zumindest einen elektronischen Bauelements berücksichtigt wird. Dies kann beispielsweise insofern erfolgen, als die Durchlasskennlinie für die Verlustleistungsberechnung anhand der aktuell (auf der übergeordneten Recheneinheit oder in der Versorgungseinheit) berechneten Temperatur erfolgt.

Das zweite thermische Modell kann somit iterativ berechnet werden, wobei mit jeder Iteration bessere Ergebnisse für die Bestimmung der Temperatur des zumindest einen elektronischen Bauelements erzielt werden können. Bei der Verlustleistungsberechnung im Rahmen des ersten thermischen Modells wird stets von einer Durchlasskennlinie ausgegangen, die der höchsten Temperatur des zumindest einen elektronischen Bauelements entspricht.

Dies ermöglicht eine genauere Berechnung der Verlustleistung. Zu große Abweichungen zwischen den mittels des ersten thermischen Modells und mittels des zweiten thermischen Modells berechneten Verlustleistungen können auf eine fehlerhafte Auslegung des ersten thermischen Modells hinweisen, womit Verbesserungen für das vereinfachte erste thermische Modell abgeleitet werden können.

Bei einer Ausführungsform kann mit Vorteil vorgesehen sein, beim Berechnen des zweiten thermischen Modells nichtlineare Abbildungen der Durchlasskennlinien, zum Beispiel über Lookup-Tables, und Schaltverlustenergien zu berücksichtigen.

Bei einer Ausführungsform kann mit Vorteil vorgesehen sein, dass das mindestens eine elektronische Bauteil zwei oder mehr elektronische Bauelemente, vorzugsweise zwei oder mehr IGBT-Chips aufweist, wobei beim Berechnen des zweiten thermischen Modells die einzelnen elektronischen Bauelemente, vorzugsweise die einzelnen IGBTs, einzeln betrachtet werden, sodass die zweite Temperatur für jedes einzelne elektronische Bauelement, vorzugsweise für jeden einzelnen IGBT-Chip berechnet wird.

Bei einer Ausführungsform kann mit Vorteil vorgesehen sein, dass das mindestens eine elektronische Bauteil zwei oder mehr elektronische Bauelemente, vorzugsweise zwei oder mehr IGBT-Chips aufweist, wobei beim Berechnen des zweiten thermischen Modells thermische Kopplungen zwischen den einzelnen elektronischen Bauelementen, vorzugsweise zwischen den einzelnen IGBTs oder zwischen den IGBTs und Dioden usw. berücksichtigt werden.

Bei einer Ausführungsform kann mit Vorteil vorgesehen sein, dass das mindestens eine elektronische Bauteil zwei oder mehr elektronische Bauelemente, vorzugsweise zwei oder mehr IGBT-Chips aufweist, wobei bei der Bestimmung der zweiten Temperatur für unterschiedliche elektronische Bauelemente mit unterschiedlichen thermischen Strecken gerechnet wird.

Bei einer Ausführungsform kann mit Vorteil vorgesehen sein, dass die Versorgungseinheit zwei oder mehr elektronische Bauteile, vorzugsweise zwei oder mehr IGBT-Module umfasst, wobei beim Berechnen der zweiten Temperatur thermische Kopplungen zwischen den einzelnen elektronischen Bauteilen, vorzugsweise zwischen den einzelnen IGBT-Modulen berücksichtigt werden.

Anhand der deutlich besseren Bestimmung der Temperatur jedes einzelnen elektronischen Bauelements, vorzugsweise jedes einzelnen IGBT-Chips kann ein Verschleiß des IGBT-Moduls genauer berechnet werden, womit eine genauere Aussage über den aktuellen Zustand des IGBTs getroffen werden kann.

Bei der Ausführung kann zweckdienlich sein, wenn das elektronische Bauteil wenigstens einen Temperatursensor umfasst und bei dem zweiten thermischen Modell eine Option vorgesehen ist, eine Temperatur des Temperatursensors - sogenannte virtuelle Sensortemperatur - zu ermitteln.

Diese berechneten virtuellen Sensortemperaturen können mit den mittels des Temperatursensors tatsächlich gemessenen Sensortemperaturen verglichen werden. Zu große Abweichungen zwischen den Werten können auf einen Defekt der Temperatursensoren hinweisen. Daraufhin kann beispielsweise ein Alarm ausgegeben werden, dass ein Temperatursensor defekt ist. Dabei kann die Berechnung der (ersten und/oder zweiten) Temperatur mit der virtuellen Sensortemperatur fortgesetzt werden.

Das zweite thermische Modell kann somit über eine Option verfügen, bei der eine (oder mehrere) virtuelle(n) Sensortemperatur(en) berechnet werden, wobei mit der(den) berechneten virtuellen Sensortemperaturen die mittels des(der) Temperatursensors(en) gemessene(n) Temperatur(en) validiert werden kann.

Wie bereits erwähnt, kann bei einer Ausführungsform vorgesehen sein, dass die Versorgungseinheit mehrere (zwei, drei, vier, fünf oder sechs) elektronische Bauteile umfassen, wobei jedes elektronische Bauteil seinerseits zwei oder mehr elektronische Bauelemente aufweisen kann. Dabei kann das zweite thermische Modell über eine Option verfügen, thermische Kopplungen zwischen den einzelnen elektronischen Bauteilen und/oder zwischen den einzelnen elektronischen Bauelementen der jeweiligen elektronischen Bauteile zu berücksichtigen.

Die oben genannte Aufgabe der Erfindung wird außerdem deinem eingangs genannten Verfahren erfindungsgemäß dadurch gelöst, dass die übergeordnete Recheneinheit eine zweite Temperatur des zumindest einen elektronischen Bauelements mittels eines zweiten thermischen Modells berechnen kann, wobei (wenn das industrielle Kontrollsystem in Betrieb ist) die Versorgungseinheit und die übergeordnete Recheneinheit derart zusammenwirken, dass zumindest eine der Temperaturen des zumindest einen elektronischen Bauelements berechnet wird.

Bei einer Ausführungsform kann zweckdienlich sein, wenn die erste Temperatur und die zweite Temperatur gleichzeitig berechnet werden.

Die in der Versorgungseinheit, beispielsweise in dem Umrichter ermittelte Chiptemperatur (die erste Temperatur), kann mit der in der übergeordneten Recheneinheit, beispielsweise auf einem Cloud-Server ermittelten Temperatur (zweite Temperatur) verglichen werden. Sind die Abweichungen zu groß, so kann dies auf eine fehlerhafte Auslegung des (vereinfachten) thermischen Modells im Umrichter (von dem ersten thermischen Modell) hindeuten, woraufhin Verbesserungen für das erste thermische Modell abgeleitet werden können.

Bei einer Ausführungsform kann es weitere Vorteile geben, wenn basierend auf der zweiten Temperatur ein (zweiter) Verschleißwert des zumindest einen elektronischen Bauelements ermittelt wird. Basierend auf der ersten Temperatur kann ebenfalls ein (erster) Verschleißwert errechnen werden. Sollen die ermittelten Werte der beiden Verschleißwerte voneinander wesentlich abweichen, kann dies ebenfalls auf eine fehlerhafte Auslegung des ersten thermischen Modells hinweisen. Daraus können Verbesserung für das erste thermische Modell abgeleitet werden.

Bei einer Ausführungsform kann es zweckmäßig sein, wenn basierend auf dem Verschleißwert, der anhand der zweiten Temperatur ermittelt wird, ein Wartungsplan für die Versorgungseinheit angepasst wird.

Bei einer Ausführungsform kann vorgesehen sein, dass das Berechnen der ersten Temperatur oder der zweiten Temperatur zumindest einen der folgenden Teilschritte umfasst:
- Berechnen einer Verlustleistung,
- Berechnen einer thermischen Strecke.

Beispielsweise ist es denkbar, wenn nur auf dem Umrichter (im Rahmen des ersten thermischen Modells) die Verlustleistungsrechnung durchgeführt wird und die daraus resultierenden Werte an die übergeordnete Recheneinheit, beispielsweise übergeordnete Steuerung übergeben werden. Somit kann bei einer Ausführungsform vorgesehen sein, dass in der übergeordneten Recheneinheit, beispielsweise in der übergeordneten Steuerung (mittels des zweiten thermischen Modells) nur eine komplexere Berechnung der thermischen Strecke stattfindet.

Im Rahmen des ersten thermischen Modells werden Verluste der elektronischen Bauelemente, beispielsweise der IGBTs und Dioden, anhand des aktuellen Betriebspunktes und der in der Versorgungseinheit hinterlegten Daten (Vcesat, Schaltverlustkennlinien, etc.) berechnet.

Im Rahmen des ersten thermischen Modells werden anhand der in der Verlustleistungsberechnung ermittelten Verluste mittels der in der Versorgungseinheit hinterlegten Daten (Thermische Widerstände und thermische Zeitkonstanten), erste Temperaturen berechnet (Hubtemperaturen zwischen dem jeweiligen Chip und dessen Sensor). Unter dem Begriff Hubtemperatur wird im Rahmen der vorliegenden Offenbarung eine Temperaturdifferenz verstanden, die über die thermischen Strecken zwischen einer Temperatur an dem Chip (IGBT, Diode, etc.) und einer Temperatur an einem Bezugspunkt, beispielsweise Temperatursensor berechnet wird. Addiert man die jeweiligen Hubtemperaturen mit den passenden Sensortemperaturen, so erhält man die Chiptemperaturen, da dabei die vorgenannten Differenzen auf die entsprechenden Sensortemperaturen addiert werden.

Bei einer Ausführungsform kann mit Vorteil vorgesehen sein, dass das Berechnen der zweiten (aber nicht die ersten) Temperatur einen oder mehrere der nachfolgenden (beim Berechnen der ersten Temperatur nicht ausführbaren) Teilschritte umfasst:
- Berücksichtigen einer aktuellen Temperatur bei einer Verlustleistungsberechnung,
- Berücksichtigen nichtlinearer Abbildungen der Durchlasskennlinien und Schaltverlustenergien,
- wenn das mindestens eine elektronische Bauteil zwei oder mehr elektronische Bauelemente aufweist, Betrachten einzelner elektronischer Bauelemente des mindestens einen elektronischen Bauteils einzeln, sodass die zweite Temperatur für jedes einzelne elektronische Bauelement berechnet wird, und/oder Berücksichtigen thermischer Kopplungen zwischen den einzelnen elektronischen Bauelementen und/oder Rechnen bei unterschiedlichen elektronischen Bauelement mit unterschiedlichen thermischen Strecken,
- wenn die Versorgungseinheit zwei oder mehr elektronische Bauteile umfasst, Berücksichtigen thermischer Kopplungen zwischen den einzelnen elektronischen Bauteilen.

Bei einer Ausführungsform kann zweckmäßig sein, wenn das elektronische Bauteil wenigstens einen Temperatursensor umfasst und bei dem Berechnen des zweiten thermischen Modells eine Temperatur des Temperatursensors ermittelt wird.

Bei einer Ausführungsform ohne den Temperatursensor kann vorgesehen sein, eine (feste beziehungsweise immer gleich bleibende) Bezugstemperatur für das (erste und/oder zweite) thermische Modell festzulegen (beispielsweise immer 25°C).

Im Folgenden wird die Erfindung anhand der in den Figuren dargestellten Ausführungsbeispiele näher beschrieben und erläutert. Es zeigen:
- FIG 1: ein Teil eines industriellen Kontrollsystems umfassend einen Umrichter mit einer übergeordneten Steuereinrichtung,
- FIG 2: einen Querschnitt eines IGBT-Moduls,
- FIG 3: ein Ablaufdiagramm eines Verfahrens zur parallelen Berechnung der IGBT-Temperaturen, und
- FIG 4: eine an eine Cloud angebundene Anordnung.

In den Ausführungsbeispielen und Figuren können gleiche oder gleich wirkende Elemente jeweils mit den gleichen Bezugszeichen versehen sein. Außerdem dienen die Bezugszeichen in den Ansprüchen und in der Beschreibung lediglich zu einem besseren Verständnis der vorliegenden Anmeldung und sollen auf gar keinen Fall als eine Beschränkung des Gegenstands der vorliegenden Erfindung angesehen werden.

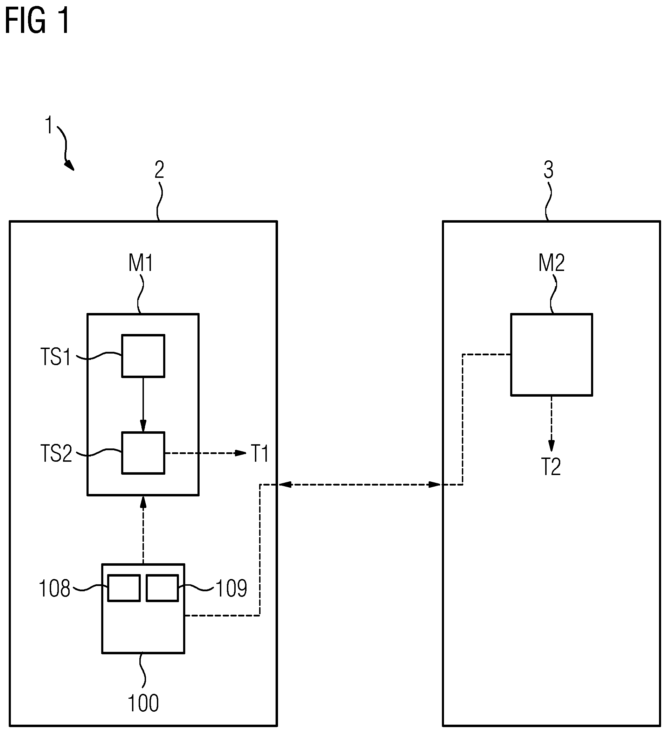

FIG 1 zeigt eine Anordnung 1, die der erfindungsgemäßen Anordnung entspricht. Die Anordnung 1 umfasst einen Umrichter 2 mit einer übergeordneten Steuereinrichtung 3. Der Umrichter 2 umfasst IGBT-Modul 100, welches beispielswese einen IGBT (einen Bipolartransistor mit isolierter Gate-Elektrode) 108 und eine Diode 109 aufweist.

Die Anordnung 1 kann beispielsweise als ein Teil eines (hier nicht gezeigten) industriellen Kontrollsystems (engl. industrial control system) zur Prozesskontrolle in einer Automatisierungsanlage ausgebildet sein. Dabei kann der Umrichter 2 zur Strom-/Spannungsversorgung einer (hier nicht gezeigten) elektrischen beispielsweise rotatorischen Maschine, insbesondere eines Asynchronmotors vorgesehen sein.

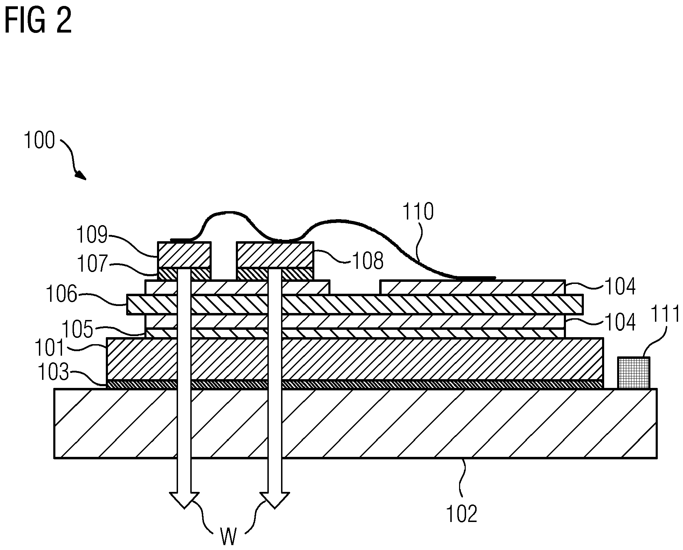

FIG 2 zeigt einen Querschnitt durch das IGBT-Modul 100. FIG 2 ist weiterhin zu entnehmen, dass das IGBT-Modul 100 eine Grundplatte 101 umfasst. Auf einer Seite der Grundplatte 101 ist eine Schicht von Wärmeleitpaste 103 aufgetragen. Auf einer anderen Seite, die der Seite der Grundplatte 101 mit der Wärmeleitpaste 103 gegenüberliegt, ist eine Schicht von Lötzinn 105 aufgetragen. Die Schicht von der Wärmeleitpaste 103 ist als eine Zwischenschicht zwischen der Grundplatte 101 und einem Kühlkörper 102 ausgebildet. Die Lötzinnschicht 105 ist als eine Zwischenschicht zwischen der Grundplatte 101 und einer Kupferschicht 104 ausgebildet, wobei die Kupferschicht 104 ein Keramikplättchen 106 trägt. Das Keramikplättchen 106 ist beidseitig von Kupferschichten 104, 104' versehen. Auf einem Teil einer weiteren von der Lötzinnschicht 105 abgewandten Kupferschicht 104' sind der IGBT 108 und die Diode 109 angebracht und mittels weiterer Lötzinnschichten 107 an der weiteren Kupferschicht 104' befestigt. Der IGBT 108, Diode 109 und ein weiterer Teil der weiteren von der Lötzinnschicht 105 abgewandten Kupferschicht 104' sind mit einem Bond-Draht 110 verbunden. Darüber hinaus weist das IGBT-Modul 100 einen Temperatursensor 111 auf. Der Wärmefluss durch das IGBT-Modul 100 (von der Diode 109 und von dem Bipolartransistor 108 in Richtung des Kühlkörpers 102) ist mit Pfeilen W gezeigt.

Der Umrichter 2 kann eine Software bzw. ein Computerprogramm sowie Mittel zum Ausführen der Software bzw. des Computerprogramms aufweisen, wobei die Software bzw. das Programm mittels eines ersten, beispielsweise in dem Umrichter 2 hinterlegten thermischen Modells M1 eine erste Temperatur T1 des IGBTs 108 berechnen kann.

Die Berechnung mittels des ersten thermischen Modells M1 kann beispielsweise zwei Teilschritte TS1, TS2 umfassen, vorzugsweise aus diesen zwei Teilschritten TS1, TS2 bestehen.

Beim ersten Teilschritt TS1 kann eine Verlustleistung berechnet werden. Dabei können Verluste des IGBTs 109 (bei mehreren Bipolartransistoren aller Bipolartransistoren) und der Diode 108 (bei mehreren Dioden aller Dioden) anhand des aktuellen Betriebspunktes des Umrichters 2 und der in dem Umrichter 2 hinterlegten Daten (Vcesat, Schaltverlustkennlinien, etc.) berechnet werden.

Die Berechnung der Verlustleistung kann beispielsweise mithilfe der Kennlinien erfolgen. Dabei wird oft von einer Kennlinie ausgegangen, bei welcher die Verluste am größten sind. Die Kennlinie kann beispielsweise anhand der berechneten ersten bzw. zweiten Temperatur gewählt bzw. bestimmt werden. Somit kann die Verlustleistungsberechnung anhand der berechneten Chiptemperatur erfolgen.

Die Berechnung der ersten und/oder der zweiten Temperatur T1 und/oder T2 kann - wenn der Temperatursensor 111 vorhanden ist - mithilfe einer mittels des Sensors 111 gemessenen Sensortemperatur erfolgen. Der Temperatursensor 111 misst dabei die Temperatur der Kühlplatte 102. Es ist denkbar, dass das IGBT-Modul 100 mehrere Sensoren 111 aufweist - bei mehreren IGBT-Modulen können unterschiedliche IGBT-Module über unterschiedliche Anzahl von Temperatursensoren verfügen. Vorzugsweise wird jeder Sensor einem oder mehreren Chips, beispielsweise dem IGBT 108 oder der Diode 109 (FIG 2), zugeordnet.

Beim zweiten Teilschritt TS2 kann eine thermische Strecke berechnet werden. Anhand der in der Verlustleistungsberechnung (Teilschritt TS1) ermittelten Verluste kann anhand der in dem Umrichter 2 hinterlegten Daten (beispielsweise thermische Widerstände und thermische Zeitkonstanten) eine Temperatur zwischen dem Chip, beispielsweise dem IGBT 108 oder der Diode 109, und dessen Sensor 111 berechnet werden (auch eine Hubtemperatur genannt). Im Falle eines einzigen Chips, z.B. eines IGBTs 108 ist dies die erste Temperatur T1. Im Falle mehrerer Chips (IGBT 108, Diode 109 usw.) können die Hubtemperaturen zwischen dem jeweiligen Chip und dessen Sensor für alle Chip-Sensor-Paare berechnet werden. Wie bereits oben erwähnt, können die Chiptemperaturen erhalten werden, indem die jeweiligen Hubtemperaturen mit den passenden Sensortemperaturen addiert werden.

Bspw. kann die thermische Strecke zwischen dem IGBT-Chip 108 und dem Sensor 111 durch drei thermische Widerstände mit drei thermischen Zeitkonstanten abgebildet werden. Mithilfe des aktuellen Betriebspunktes des Umrichters 2 (Strom, Spannung, Frequenz, Aussteuergrad) kann somit die aktuelle erste Temperatur T1 des IGBTs 108 berechnet werden.

Die übergeordnete Steuereinrichtung 3 ist konfiguriert, eine zweite Temperatur T2 des IGBTs 108 mittels eines zweiten thermischen Modells M2 zu berechnen. Zu diesem Zweck kann die übergeordnete Steuereinrichtung 3 ebenfalls eine Software bzw. ein Computerprogramm sowie Mittel zum Ausführen der Software bzw. des Computerprogramms umfassen.

Es versteht sich, dass ein Umrichter mehrere IGBT-Module umfassen kann. Dabei können die Temperaturen T1, T2 der jeweiligen elektronischen Bauelemente (IGBTs und/oder Dioden etc.) in jedem einzelnen IGBT-Modul beispielsweise mittels der vorgenannten Softwareprogramme berechnet werden.

Der Umrichter 2 und die übergeordnete Steuereinrichtung 3 wirken derart zusammen, dass, wenn die Automatisierungsanlage und folglich das industrielle Kontrollsystem in Betrieb sind, stets, d.h. zu jedem beliebigen Zeitpunkt, zumindest eine der Temperaturen T1, T2 berechnet wird. Beispielsweise, wenn der Umrichter 2 in Betrieb ist, kann sowohl die erste Temperatur T1 als auch die zweite Temperatur T2 vorzugsweise gleichzeitig berechnet und beispielsweise miteinander verglichen werden.

Darüber hinaus ist es denkbar, dass nur die erste oder nur die zweite Temperatur berechnet wird, um die zur Verfügung stehenden Rechenressourcen zu sparen.

Außerdem kann es zweckdienlich sein, die zweite Temperatur T2 weiterhin zu rechnen, wenn der Umrichter 2 nicht mehr bestromt wird. Dabei kann der berechnete Wert der zweiten Temperatur T2 als ein Anfangswert verwendet werden, wenn der Umrichter 2 wieder in Betrieb genommen wird.

Das erste thermische Modell M1 kann, um beispielsweise die Rechenressourcen des Umrichters 2 zu sparen, vereinfacht ausgeführt sein. D.h. das zweite thermische Modell M2 kann detaillierter als das erste thermische Modell M1 sein.

Beispielsweise kann das erste thermische Modell M1 im Vergleich zu dem zweiten thermischen Modell M2 eine oder mehrere der folgenden Vereinfachungen umfassen:
- Keine Berücksichtigung der aktuellen Temperatur T2 bei der Verlustleistungsberechnung,
- Vereinfachte, beispielsweise nur lineare Abbildungen der Durchlasskennlinien und Schaltverlustenergien,
- keine getrennte Betrachtung der IGBT- und Diodentemperatur (beim ersten thermischen Modell M1 werden nur IGBT-Temperaturen berechnet),
- vereinfachte Abbildung der thermischen Kopplungen zwischen den Elementen, bei der beispielsweise keine Berücksichtigung von thermischen Kopplungen zwischen den elektronischen Bauelementen (z.B. thermische Kopplung zwischen IGBT 108 und Dioden 109, bzw. zwischen einzelnen elektronischen Bauteilen, beispielsweise IGBT-Modulen 100) stattfindet,
- vereinfachte Abbildung der thermischen Strecken der Bauelemente, bei der beispielsweise für alle IGBT-Chips 108 mit der gleichen thermischen Strecke gerechnet wird.

Umgekehrt heißt das, dass das zweite thermische Modell M2 im Vergleich zu dem ersten thermischen Modell M1 eine oder mehrere der oben gelisteten zusätzlichen Optionen hat.

Durch Berücksichtigung der aktuellen Temperatur wird eine Berücksichtigung der Temperaturabhängigkeit der Durchlasskennlinien ermöglicht. Die Temperaturabhängigkeit der Durchlasskennlinien kann beispielsweise in Form einer Rückkopplung realisiert werden, bei der das zweite thermische Modell M2 iterativ gerechnet wird, wobei ein in einer Iteration berechneter Wert der zweiten Temperatur T2 als Eingangswert bei der nächsten Iteration verwendet wird. Beispielsweise kann das zweite thermische Modell M2 in einer ersten Iteration (z.B. bei Verlustleistungsberechnung) ausgehend von einer Kennlinie gerechnet werden, die der höchsten Temperatur des IGBTs 108 entspricht. Der auf diese Weise ermittelte aktuelle Temperaturwert des IGBTs 108 kann anschließend in einer zweiten Iteration verwendet werden, um die Verlustleistungsberechnung ausgehend von einer anderen Kennlinie durchzuführen, wobei die andere Kennlinie anhand des aktuellen Temperaturwertes des IGBTs 108 gewählt wird. Somit kann das zweite thermische Modell M2 eine Berücksichtigung der Temperaturabhängigkeit der Durchlasskennlinien ermöglichen.

In dem ersten thermischen Modell M1 wird für jeden Chip (IGBT-Chip 108) oder Diode 109 von der gleichen thermischen Strecke zwischen dem Chip 108, 109 und dem Temperatursensor 111 ausgegangen. Bei den thermischen Vermessungen der Umrichter können alle Strecken zwischen dem jeweiligen Chip (IGBT, Diode) 108, 109 und dementsprechenden Temperatursensor 111 vermessen und in dem Umrichter hinterlegt werden, wobei auch beispielsweise Vermessung und Hinterlegung nur einer einzigen "worst-case"-Strecke denkbar ist.

Bei dem zweiten thermischen Modell M2 kann ohne diese Annahme gerechnet werden und beim Berechnen der zweiten Temperatur T2 von unterschiedlichen thermischen Strecken für unterschiedliche Chip-Sensor-Paare ausgegangen werden.

Das erste thermische Modell M1 innerhalb der Umrichtersoftware ist deshalb lediglich dazu ausgelegt, die IGBT-Chips 108 vor einer Übertemperatur zu schützen.

Außerdem können beim zweiten thermischen Modell M2 zusätzlich thermische Kopplungen zwischen einzelnen IGBT-Modulen 100 berücksichtigt werden, wenn der Umrichter 2 mehrere IGBT-Module 100 umfasst. Somit kann ein sicherer Schutz der Umrichter bei einer zumindest gleichbleibenden Umrichter Performance erzielt werden. Insbesondere kann dadurch vermieden werden, dass die Umrichter zu schnell ins Derating gehen.

Wird bei dem zweiten thermischen Modell M2 gleichzeitig berücksichtigt, dass jeder Chip (z.B. IGBT-Chip 108 oder Diode 109) eine eigene thermische Strecke hat und dass die einzelnen elektronischen Bauelemente 108, 109 miteinander thermisch gekoppelt sind, können obendrein Verschleiße der einzelnen Chips 108, 109 berechnet werden und Ungenauigkeiten bei der Berechnung der Verschleiße der einzelnen Chips 108, 109 verringert werden.

Die Berechnung der ersten Temperatur T1 in der Software des Umrichters 2 kann parallel zur Berechnung der zweiten Temperatur T2 in der übergeordneten Steuereinrichtung 3 stattfinden.

Die übergeordnete Steuereinrichtung 3 kann als ein Edge-Gerät oder als ein Cloud-Server ausgebildet sein. Die übergeordnete Steuereinrichtung 3, beispielsweise das Edge-Gerät, kann hierbei über das vorhin beschriebene deutlich komplexere zweite Modell M2 für die Berechnung der Verlustleistungen, als auch der thermischen Strecken verfügen und dieses zweite Modell M2 auch (zeit- und/oder ressourcen-) effizient berechnen.

Bei dem zweiten thermischen Modell M2 können nichtlineare Abbildungen der Durchlasskennlinien und Schaltverlustenergien berücksichtigt werden (z.B. über Lookup-Tables). Dadurch kann beispielsweise eine exaktere Abbildung der Durchlasskennlinien erreicht werden. Die Durchlassverlustkennlinien weisen in etwa die Form einer e-Funktion (Exponentialfunktion) auf. Bei dem ersten thermischen Modell M1 wird diese e-Funktion zwecks Vereinfachung mittels einer einfachen Geraden-Gleichung abgebildet, wodurch sich unvermeidbar Fehler in der Berechnung ergeben. Beim zweiten thermischen Modell M2 kann diese Kennlinie exakt abgebildet sein (z.B. als eine Lookup-Table), wodurch die Fehler in der Berechnung der Verluste reduziert werden können.

Beim zweiten thermischen Modell M2 kann beispielsweise für jeden IGBT-Chip 108 eine eigene thermische Strecke hinterlegt werden.

Außerdem können zusätzlich die Diodentemperaturen in dem zweiten thermischen Modell M2 separat, d.h. unabhängig von der Berechnung der IGBT-Temperaturen, berechnet werden.

Außerdem können aufgrund der großen Rechenleistung und nahezu unbegrenzten Speicherkapazität der
Edge, auch sehr komplexe thermische Kopplungen zwischen einzelnen Komponenten abgebildet werden.

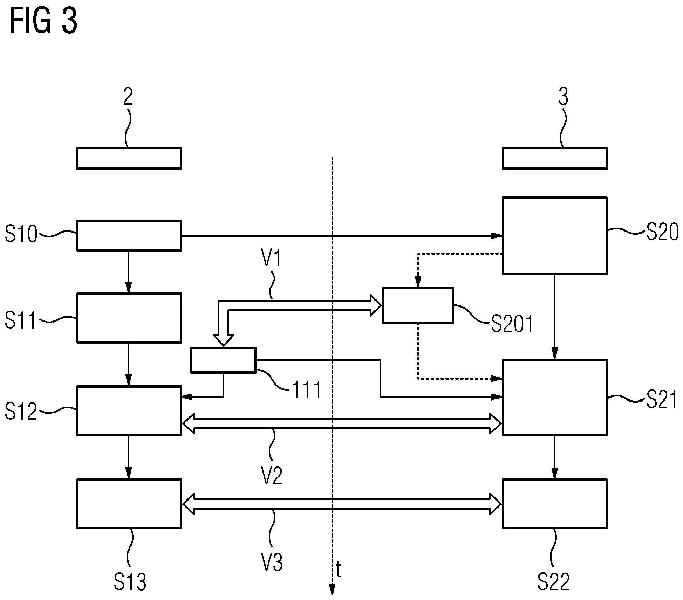

FIG 3 zeigt ein Beispiel, wie der Umrichter 2 und die übergeordnete Steuereinrichtung 3 zusammenwirken können. Ein mit "t" beschrifteter Pfeil weist auf die zeitliche Reihenfolge hin.

In einem Schritt S10 stellt der Umrichter 2 der übergeordneten Steuereinrichtung 3 für das Berechnen des zweiten thermischen Modells M2 relevante Daten bereit. Diese für das Berechnen des zweiten thermischen Modells M2 relevanten Daten können beispielsweise Strom, Spannungen, Aussteuergrade, Pulsfrequenzen, etc. sein.

Die relevanten Daten können zwischen denen, die in dem Umrichter hinterlegt sind, und denen, die für die Berechnung in der übergeordneten Steuereinrichtung benötigt werden, abweichen. Aus diesem Grund kann die Berechnung mittels des ersten thermischen Modells M1 und des zweite thermischen Modells M2 unterschiedlich passieren. Beispielsweise kann im Rahmen des ersten thermischen Modells M1 mit Aussteuergraden, wobei im Rahmen des zweiten thermischen Modells M2 mit Modulationsindizes gerechnet werden kann. Aufgrund dessen können unterschiedliche Daten übertragen werden.

In einem Schritt S11 kann mittels des Umrichters 2, d.h. mittels des ersten thermischen Modells M1, eine erste Verlustleistung berechnet werden. Vorzugsweise parallel dazu in einem Schritt S20 kann mittels der übergeordneten Steuereinrichtung 3, d.h. mittels des zweiten thermischen Modells M2, eine zweite (komplexere) Verlustleistung berechnet werden. Beim Berechnen der zweiten Verlustleistung im Rahmen des zweiten thermischen Modells M2 kann eine oder mehrere der vorgenannten zusätzlichen Optionen gewählt werden. Beispielsweise können/kann dabei die aktuelle zweite Temperatur T2 und/oder nichtlineare Abbildungen der Durchlasskennlinien und/oder Schaltverlustenergien berücksichtigt werden.

Bei dem zweiten thermischen Modell M2 kann darüber hinaus vorgesehen sein, dass auch die Temperatur des Temperatursensors 111 bzw. bei mehreren Temperatursensoren - die Temperatur jeden Temperatursensors berechnet wird - Schritt S201. Die berechnete Temperatur des Temperatursensors wird auch "virtuelle Sensortemperatur" genannt. Diese berechneten virtuellen Sensortemperaturen können wiederum mit den tatsächlich gemessenen Temperaturen der Temperatursensoren 111 verglichen werden - Schritt V1. Zu große Abweichungen zwischen den Werten können auf einen Defekt der Temperatursensoren hinweisen. Daraufhin könnte ein Alarm ausgegeben werden, dass der Temperatursensor 111 defekt ist. In weiterer Folge kann die Berechnung mittels des ersten thermischen Modells M1 in dem Umrichter 2 (und auch des zweiten thermischen Modells M2 in der übergeordneten Steuereinrichtung 3) mit der virtuellen Sensortemperatur fortgesetzt werden.

In einem Schritt S12 kann die erste Temperatur T1 des IGBT-Chips 108 in dem Umrichter 2 berechnet werden. Hierzu kann, wie eben beschrieben, die tatsächlich gemessene Temperatur des Temperatursensors 111 oder auch die virtuelle Sensortemperatur verwendet werden.

Vorzugsweise parallel zu dem Schritt S12 kann die zweite Temperatur T2 des IGBT-Chips 108 in der übergeordneten Steuereinrichtung 3 berechnet werden. Beim Berechnen der zweiten Temperatur T2 im Rahmen des zweiten thermischen Modells M2 kann eine oder mehrere der vorgenannten zusätzlichen Optionen gewählt werden. Beispielsweise können dabei thermische Kopplungen zwischen unterschiedlichen IGBT-Chips und/oder zwischen den IGBT-Chips und Dioden (und/oder anderen hier nicht gezeigten elektronischen Bauelementen, die das IGBT-Modul 100 umfassen kann) berücksichtigt werden und/oder verschiedene thermische Strecken für verschiedene IGBT und/oder Dioden (und/oder andere hier nicht gezeigte elektronische Bauelementen, die das IGBT-Modul 100 umfassen kann) verwendet werden etc.

In einem Schritt V2 kann die erste Temperatur T1 des IGBTs 108 mit der zweiten Temperatur T2 verglichen werden.

In einem Schritt S13 kann anhand der berechneten ersten Temperatur T1 in dem Umrichter 2 ein erster Verschleiß des IGBT 108 berechnet werden. Vorzugsweise parallel dazu kann in einem Schritt S22 auf der übergeordneten Steuereinrichtung 3 ein zweiter Verschleiß des IGBT 108 aufgrund der berechneten zweiten Temperatur T2 berechnet werden.

In einem Schritt V3 kann der erste Verschleiß mit dem zweiten Verschleiß verglichen werden.

Aufgrund des oben Gesagten kann die Genauigkeit, mit der der Verschleiß des IGBT 108 ermittelt wird, erhöht werden, indem der Verschleiß basierend auf der zweiten, mithilfe des zweiten thermischen Modells M2 ermittelten Temperatur T2 berechnet wird. Somit kann eine genauere Aussage über den Zustand des IGBT-Moduls 100 getroffen werden, wodurch ein besserer Wartungsservice für Kunden angeboten werden kann. Außerdem kann eine Steigerung der Robustheit für den Kunden erzielt werden.

Zudem ist es denkbar, dass der Umrichter 2 in Betrieb alle für den Betrieb des Umrichters 2 relevanten Daten (Temperaturen und Verschleißwerte) von der übergeordneten Steuereinrichtung 3, die beispielsweise der in einer Cloud angeordnet sein kann, erhält, solange eine Datenverbindung zwischen dem Umrichter 2 und der übergeordneten Steuereinrichtung 3 besteht. In diesem Fall muss das erste thermische Modell M1 gar nicht gerechnet werden. Dadurch können der Ressourcen des Umrichters 2 gespart werden.

In dem Fall, in dem die Datenverbindung ausfällt, kann der Umrichter 2, die Berechnung der ersten Temperatur T1 wieder mit seinen eigenen Werten übernehmen.

Außerdem ist es denkbar, dass die übergeordnete Steuerung 3, zum Beispiel das Edge-Gerät, die Berechnung der zweiten Temperatur T2 übernimmt, solange der Umrichter 2 ausgeschalten ist. Somit ist auch eine Temperaturbestimmung möglich, wenn der Umrichter 2 über keine Versorgungsspannung verfügt, und somit die erste Temperatur T1 nicht mehr bestimmen kann. Dies ist vorteilhaft, weil, wenn der Umrichter 2 abgeschalten ist, die Information über die Temperatur des IGBT 108 und vor allem die Information über die thermische Strecke verloren geht. Die vorgenannten Informationen stünden zur Berechnung der Temperatur des IGBT 108 beim Wiedereinschalten des Umrichters 2 gar nicht mehr zur Verfügung, wenn die Berechnung der Temperatur mittels des zweiten thermischen Modells M2 auf der übergeordneten Steuereinrichtung 3 nicht stattfinden würde, während der Umrichter 2 aus war. D.h. Beim Ausschalten des Umrichters 2 (keine Versorgungsspannung) kann die übergeordnete Steuereinrichtung 3 die Berechnung der Temperaturen fortführen und diese Temperaturen dem Umrichter 2 beim Wiedereinschalten mitteilen.

Sollten wesentliche Unterschiede bei dem Vergleich der Werte, der in einem oder mehreren der vorgenannten Schritten V1, V2, V3 vorgenommen wird, festgestellt werden, kann dies auf eine fehlerhafte Auslegung des ersten thermischen Modells M1 hindeuten. Daraus können Verbesserungen für die Entwicklungen des ersten thermisches Modells M1 auf dem Umrichter 2 abgeleitet werden. Somit kann das erste thermische Modell M1 stetig weiterentwickelt werden. Außerdem ist dadurch eine Hilfestellung für eine Weiterentwicklung von Runtime-Software auf den Umrichtern möglich.

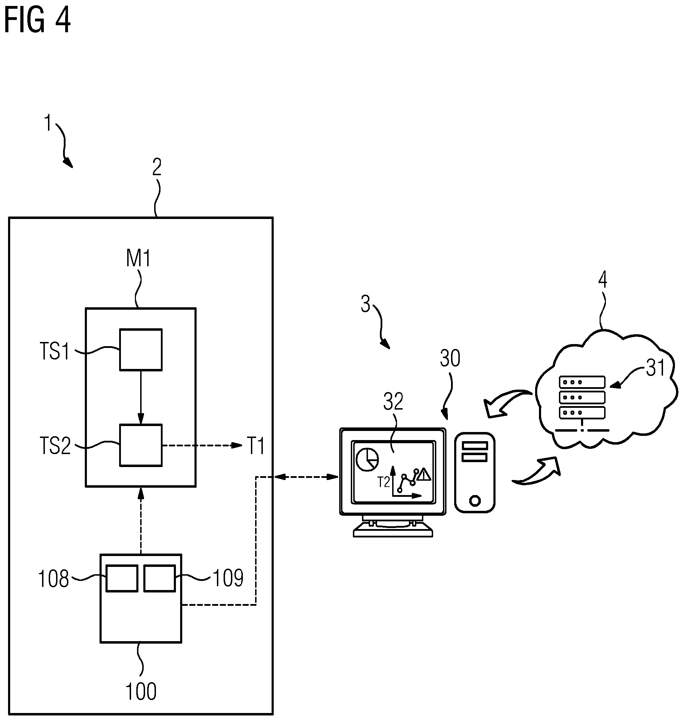

FIG 4 zeigt beispielhaft eine Anordnung 1, die an eine Cloud 4 angebunden ist. Wie bereits erläutert, wird in der Software des Umrichters 2 die erste Temperatur T1 der elektronischen Bauelemente 108, 109 mittels des ersten thermischen Modells M1 berechnet, wobei das erste thermische Modell M1 zwei vorgenannte Teilschritte TS1 und TS2 umfassen kann. Die übergeordnete Steuereinrichtung 3 kann dabei mehrere Komponenten umfassen. Beispielsweise umfasst übergeordnete Steuereinrichtung 3 einen lokale (nicht in der Cloud angeordneten) Recheneinheit 30, die zur Kommunikation mit einem Cloudserver 31 eingerichtet ist. Auf der Recheneinheit 30, beispielsweise auf ihrer hier nicht gezeigten Festplatte, ist ein Computerprogramm 32 ausführbar gespeichert. Wenn das Computerprogramm 32 ausgeführt wird, veranlasst es die Anordnung 1 einen oder mehrere der vorgenannten Verfahrensschritte auszuführen. Dabei kann das Computerprogramm 32 die Recheneinheit 30 dazu veranlassen, dass die Recheneinheit 30 das zweite thermische Modell M2 berechnet und dabei bei Bedarf auf die Rechenressourcen des Cloudservers 31 zugreift, um beispielsweise die zweite Temperatur T2 gemäß einer oder mehreren der vorgenannten Optionen des zweiten thermischen Modells M2 zu ermitteln. Insbesondere kann die Berücksichtigung von allen thermischen Kopplungen rechenintensiv sein, sodass in diesem Fall die Rechenressourcen des Cloudservers 31 ganz nützlich sind.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können die im Zusammenhang mit dem Verfahren beschriebenen Merkmale auch bei der Anordnung zum Einsatz kommen bzw. diese vervollständigen und *vice versa.*

## Patentansprüche

1. Anordnung umfassend eine Versorgungseinheit (2) eines industriellen Kontrollsystems, wobei der Versorgungseinheit (2) eine übergeordnete Recheneinheit (3) zugeordnet ist, wobei die Versorgungseinheit (2) mindestens ein elektronisches Bauteil (100) umfasst, wobei das mindestens eine elektronische Bauteil (100) zumindest ein elektronisches Bauelement (108,109) aufweist, wobei die Versorgungseinheit (2) dazu ausgebildet ist, eine erste Temperatur (T1) des zumindest einen elektronischen Bauelements (108,109) mittels eines ersten thermischen Modells (M1) zu berechnen, und die übergeordnete Recheneinheit (3) dazu konfiguriert ist, eine zweite Temperatur (T2) des zumindest einen elektronischen Bauelements (108,109) mittels eines zweiten thermischen Modells (M2) zu berechnen, wobei die Versorgungseinheit (2) und die übergeordnete Recheneinheit (3) derart zusammenwirken, dass zumindest die erste Temperatur (T1) oder die zweite Temperatur (T2) des zumindest einen elektronischen Bauelements (108, 109) berechnet wird.

2. Anordnung nach Anspruch 1, wobei die Versorgungseinheit als ein Umrichter (2) ausgebildet ist.

3. Anordnung nach Anspruch 1 oder 2, wobei die Recheneinheit als eine übergeordnete Steuerung (3), als ein Edge-Gerät oder als ein Cloud-Server ausgebildet ist.

4. Anordnung nach einem der Ansprüche 1 bis 3, wobei das zweite thermische Modell (M2) detaillierter als das erste thermische Modell (M1) ist.

5. Anordnung nach einem der Ansprüche 1 bis 4, wobei das elektronische Bauteil (100) wenigstens einen Temperatursensor (111) umfasst und bei dem zweiten thermischen Modell (M2) eine Option vorgesehen ist, eine Temperatur des Temperatursensors (111) zu ermitteln, wobei vorzugsweise die erste Temperatur (T1) in Abhängigkeit von der mittels des zweiten thermischen Modells (M2) ermittelten Temperatur des Temperatursensors (111) ermittelt wird.

6. Anordnung nach einem der Ansprüche 1 bis 5, wobei das elektronische Bauelement als ein Halbleiterbauelement, insbesondere als ein IGBT (108) oder als eine Diode (109) ausgebildet ist, wobei das elektronische Bauteil (100) vorzugsweise als ein IGBT-Modul ausgebildet ist.

7. Verfahren zum Ermitteln mindestens einer Temperatur (T1, T2) zumindest eines elektronischen Bauelements (108,109) mindestens eines elektronischen Bauteils (100) einer Versorgungseinheit (2) eines industriellen Kontrollsystems, wobei die Versorgungseinheit (2) mit einer übergeordneten Recheneinheit (3) versehen ist, wobei die Versorgungseinheit (2) eine erste Temperatur (T1) des zumindest einen elektronischen Bauelements (108,109) mittels eines ersten thermischen Modells (M1) berechnen kann, wobei die übergeordnete Recheneinheit (3) eine zweite Temperatur (T2) des zumindest einen elektronischen Bauelements (108,109) mittels eines zweiten thermischen Modells (M2) berechnen kann, wobei die Versorgungseinheit (2) und die übergeordnete Recheneinheit (3) derart zusammenwirken, dass zumindest eine der Temperaturen (T1, T2) des zumindest einen elektronischen Bauelements (108,109) berechnet wird.

8. Verfahren nach Anspruch 7, wobei basierend auf der zweiten Temperatur (T2) ein Verschleißwert des zumindest einen elektronischen Bauelements (108,109) ermittelt wird und vorzugsweise basierend auf dem Verschleißwert ein Wartungsplan für die Versorgungseinheit (2) angepasst wird.

9. Verfahren nach Anspruch 7 oder 8, wobei die erste Temperatur (T1) und die zweite Temperatur (T2) gleichzeitig berechnet werden.

10. Verfahren nach einem der Ansprüche 7 bis 9, wobei das Berechnen der ersten Temperatur oder der zweiten Temperatur zumindest einen der folgenden Teilschritte umfasst:
- Berechnen einer Verlustleistung,
- Berechnen einer thermischen Strecke.

11. Verfahren nach einem der Ansprüche 7 bis 10, wobei das Berechnen der ersten Temperatur (T1) einfacher als das Berechnen der zweiten Temperatur (T2) ist.

12. Verfahren nach einem der Ansprüche 7 bis 11, wobei das elektronische Bauteil (100) wenigstens einen Temperatursensor (111) umfasst und bei dem Berechnen des zweiten thermischen Modells (M2) eine Temperatur des Temperatursensors (111) ermittelt wird, wobei vorzugsweise die erste Temperatur (T1) in Abhängigkeit von der mittels des zweiten thermischen Modells (M2) ermittelten Temperatur des Temperatursensors (111) ermittelt wird.

13. Computerprogramm, insbesondere eine Cloud-App, umfassend Befehle, die bei der Ausführung des Programms durch eine Anordnung nach einem der Ansprüche 1 bis 6 diese veranlassen, ein Verfahren nach einem der Ansprüche 7 bis 12 auszuführen.

14. Datenträgersignal, das das Computerprogramm nach Anspruch 13 überträgt.

15. Maschinenlesbares Speichermedium umfassend das Computerprogramm nach Anspruch 13.
